# EUROPÄISCHE PATENTANMELDUNG

(11) **EP 1 688 076 A1**
(43) Veröffentlichungstag der Anmeldung: **09.08.2006**
(21) Anmeldenummer: 06001580.7
(22) Anmeldetag: 26.01.2006
(51) Int. Cl.: A47J 45/06, A47J 36/12

(54) **Gargefäss**

(30) Priorität: 04.02.2005 DE 202005001914 U
(71) Anmelder: Fissler GmbH, 55743 Idar-Oberstein (DE)
(72) Erfinder: Fissler, Folkhart, 55743 Idar-Oberstein (DE)
(74) Vertreter: KEIL & SCHAAFHAUSEN Patentanwälte

(57) **Zusammenfassung**

Die Erfindung bezieht sich auf ein Gargefäß aus einem Behälter (1) und einem Deckel (2), welche jeweils wenigstens einen Griff (Behältergriff (3, 3'); Deckelgriff (4, 4')) aufweisen, wobei der wenigstens eine Deckelgriff (4) einen über den Deckelrand (5) hinausstehenden Griffarretierungsabschnitt (6) hat, welcher in eine Aussparung (7, 7') oder Vertiefung des wenigstens einen Behältergriffes (3, 3') derart einsteckbar ist, dass der Deckel (2) in einer solchen aufrechten Position an dem Behälter (1) gehalten ist, in welcher wenigstens der unterste Bereich (17) der Deckelinnenseite (10) über bzw. in der Behälteröffnung (11) liegt.

## Beschreibung

Die Erfindung bezieht sich auf ein Gargefäß aus einem Behälter und einem Deckel, welche jeweils wenigstens einen Griff (Behältergriff; Deckelgriff) aufweisen.

Aus der DE 102 47 961 A1 ist ein Halter für einen Deckel eines/einer mit Griff ausgestatteten Kochtopfes bzw. Pfanne bekannt, bei welchem am Griff des Kochtopfes bzw. der Pfanne in zwei beabstandeten radialen Ebenen zur Zylinderachse des Kochtopfes/der Pfanne Abstützelemente vorgesehen sind, zwischen welche der Deckel mit seinem Rand in im Wesentlichen vertikal aufgerichteter Stellung aufstellbar ist. Hierdurch soll die Aufgabe gelöst werden, eine sichere und praktische Ablage für den Deckel eines Kochtopfes bzw. einer Pfanne bereitzustellen, mit der eine thermische Belastung sowie Beschmutzung von Küchenmöbeln verhindert wird, wenn der Deckel während des Kochvorganges von dem Kochtopf/der Pfanne abgenommen und abgelegt werden soll. Die vorgeschlagene Lösung hat den Nachteil, dass entweder ein besonderer Halter vorgesehen sein muss, was die Handhabung erschwert, oder die betreffenden Abstützelemente an den Griffen des Kochtopfes/der Pfanne nach oben stehend ausgebildet sind, so dass die Griffe nur noch schwer zu ergreifen und schlecht zu reinigen sind. Außerdem befindet sich der Deckel in der abgenommenen Position außerhalb der Topf- bzw. Pfannenöffnung, so dass an der Deckelinnenseite niedergeschlagenes Kondensat auf die Arbeitsfläche tropft.

Das gleiche Problem besteht bei der aus der DE 100 06 007 A1 bekannten Vorrichtung zur Speisenzubereitung in Form von Kochtöpfen und Kasserollen etc., bestehend aus einem Behälter, an dessen Außenseite Griffe angebracht und als Deckelhalter ausgebildet sind, weil sich dort der Deckel in seiner Halteposition ebenfalls außerhalb des Behälters befindet. Bei der Ausführungsart, bei welcher an dem Deckelgriff ein Deckelhalter ausgebildet ist oder der Deckel mindestens eine Deckelaussparung im Rand aufweist, kann der Deckel zur Halterung zwar so positioniert werden, dass Kondensat in das Innere des Behälters abfließt, dabei ragt der Deckel wegen seiner Schräglage jedoch verhältnismäßig weit in den Querschnitt der Behälteröffnung hinein, so dass der Zugang zu den in dem Behälter befindlichen Speisen verhindert bzw. zumindest behindert ist.

Aus der DE 633 874 C ist eine aufwändige gesonderte Deckelhaltevorrichtung, bestehend aus einem über die Topfgriffe steckbaren Drahtgestellt mit einem Halterahmen für den Deckelrand bekannt, bei welcher dieses mit zwei einander gegenüberliegenden, die seitlichen Topfgriffstege klemmend umfassenden U-förmigen Doppelhalteklammern versehen ist, so dass von dem aufgesteckten Deckel das anhaftende Schwadenwasser in den Topf zurückläuft.

Aufgabe der vorliegenden Erfindung ist es, ein Gargefäß der eingangs genannten Art vorzuschlagen, bei welcher die zum Stand der Technik geschilderten Nachteile vermieden sind, d. h. insbesondere der Benutzungskomfort bei sicherer Abführung des Kondensats von dem Deckel in den Behälter erhöht ist.

Diese Aufgabe wird mit den Merkmalen des Anspruchs 1 bspw. im Wesentlichen dadurch gelöst, dass der wenigstens eine Deckelgriff einen über den Deckelrand radial hinausstehenden Griffarretierungsabschnitt hat, welcher in eine Aussparung oder Vertiefung des wenigstens einen Behältergriffes derart einsteckbar ist, dass der Deckel in einer solchen aufrechten Position an dem Behälter gehalten ist, in welcher wenigstens der unterste Bereich der Deckelinnenseite über bzw. in der Behälteröffnung liegt. Dabei kann dieser unterste Bereich auch mit einer Einrichtung bzw. z. B. rinnenförmigen Formgestaltung zur Ableitung des Kondensats versehen sein.

Diese Lösung ist technisch einfach und behindert aufgrund der Gestaltung die Handhabung der Behältergriffe den Zugang zu dem Behälterinneren nicht, wenn sich der Deckel in seiner aufrechten Halteposition befindet. Aufgrund der geometrischen Anordnung und Ausgestaltung der Behältergriffe und insbesondere der Verlängerungen der Deckelgriffe über den Behälterrand hinaus wird erreicht, dass der Deckel ohne besondere Haltevorrichtung so an dem Behälter positionierbar ist, dass auf der Deckelinnenseite niedergeschlagenes Kondensat mit Sicherheit in das Behälterinnere gelangt.

Vorzugsweise kann der Behälter auf zwei einander gegenüberliegenden Seiten je einen an seiner Umfangswandung angebrachten Behältergriff aufweisen, welche beide erfindungsgemäß ausgebildet sind. Der Deckel kann daher auf beiden Seiten des Behälters in seine Halteposition gebracht werden, was die Nutzbarkeit der Erfindung sowohl für Rechtshänder als auch für Linkshänder unabhängig von der Drehstellung des Gefäßes zum Benutzer verbessert.

Dementsprechend kann auch der Deckel auf zwei einander gegenüberliegenden Seiten seines Deckelrandes einen Deckelgriff aufweisen, welcher die erfindungsgemäßen Eigenschaften hat, so dass der Deckel links oder rechts an dem Behälter abgestellt werden kann.

Die Griffarretierungsabschnitte können insbesondere so gestaltet sein, dass sie bei geschlossenem Deckel an bzw. so dicht bei den jeweiligen darunter befindlichen Deckelgriffen liegen oder zumindest mit den Behältergriffen erfasst werden können, so dass das Abgießen von Flüssigkeit aus dem mit Deckel versehenen Behälter, ggf. über eine besonders frei gehaltene Abgussöffnung erleichtert wird.

Eine weitere Verbesserung ergibt sich in diesem Zusammenhang, wenn die jeweilige Kontur der Oberseite der Behältergriffe an die Kontur der Unterseite der Deckelgriffe angepasst ist, da dann die jeweils zugeordneten Griffe beim gemeinsamen Ergreifen fast aneinander liegen.

Mit Vorteil kann auch vorgesehen sein, dass die jeweilige Oberseite der Behältergriffe und die Unterseite der Deckelgriffe in Radialrichtung zueinander passend leicht abgewinkelt bzw. gekrümmt sind, so dass kein Auflegen des Deckels auf den Behälter eine zusätzliche Zentrierung des Deckels auf dem Behälter erfolgt.

Bei einer besonders einfachen Ausgestaltung der Erfindung hat der Behälter zwei vorzugsweise als Bügelgriffe ausgebildete Behältergriffe, deren Bügelöffnungen die Aussparungen für den Griffarretierungsabschnitt bildet.

Zur einfachen Handhabung des Deckels kann wenigstens ein Deckelgriff einen wenigstens einen Teilbereich des Deckels im Abstand übergreifenden Bügelgriff (Halbbügelgriff) aufweisen, dessen Griffarretierungsabschnitt eine Verlängerung über den Deckelrand hinaus darstellt. Auf diese Weise kann der Deckel aus seiner Halteposition einfach wieder herausgenommen werden, da der verhältnismäßig große Bügelgriff zur Handhabung zur Verfügung steht.

Der wenigstens eine Deckelgriff kann aber auch als Bügelgriff (Vollbügelgriff) ausgebildet sein, welcher in einem flachen Bogen die gesamte Oberseite des Deckels überkragt und wenigstens an einem Ende mit einer Verlängerung über den Deckelrand hinaus einen Griffarretierungsabschnitt bildet. Derartige Bügelgriffe stellen ein für die Anmelderin typisches Ausstattungsmerkmal der sog. "Fissler-Magic-Line" dar, welches nicht nur eine ansprechende Formgebung, sondern auch eine verbesserte Handhabung des Deckels gewährleistet. Die Erfindung bezieht sich insoweit also auch auf eine neuartige Weiterentwicklung der bekannten "Magic-Line"-Gargefäße.

Zur Vereinfachung der Fertigung aus wenigen Ausgangsteilen können erfindungsgemäß die beiden einander gegenüberliegenden Behältergriffe, aber auch die beiden einander gegenüberliegenden Deckelgriffe jeweils untereinander identisch sein.

Zur einfachen und sicheren Positionierung des Deckels über dem Behälter wird mit der Erfindung ferner vorgeschlagen, dass die Aussparung oder Vertiefung des wenigstens einen Behältergriffes diesen im Wesentlichen senkrecht von oben nach unten durchsetzt und der Griffarretierungsabschnitt im Wesentlichen radial von dem Deckelrand absteht.

Es ist weiterhin von Vorteil, wenn sich der Deckel in seiner aufrechten Position, vorzugsweise mit seinem Einsteckrand, an dem Behälterrand, vorzugsweise an einem die Behälteröffnung begrenzenden Schüttrand, abstützt, um die Sicherheit der Halteposition zu unterstützen.

In besonderer Ausgestaltung des Erfindungsgedankens liegt wenigstens der unterste Bereich der Deckelinnenseite in der aufrechten Position des Deckels über einem die Behälteröffnung begrenzenden, zum Behälterinneren schräg abfallenden Schüttrand, so dass das Kondensat beim Abfließen zunächst auf diesen Schüttrand gelangt und an der Innenwandung des Behälters herabfließen kann.

Die Griffe (Behältergriffe; Deckelgriffe) sind vorzugsweise aus schlecht wärmeleitendem Kunststoff ausgebildet, und/oder mittels eines schlecht wärmeleitenden Überganges mit der Behälterwandung bzw. der Deckelwandung verbunden.

Weitere Ziele, Merkmale, Vorteile und Anwendungsmöglichkeiten der Erfindung ergeben sich aus der nachfolgenden Beschreibung von Ausführungsarten anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung oder deren Rückbeziehung.

Es zeigen:
- Fig. 1: im Vertikalschnitt ein die Erfindung aufweisendes Gargefäß, wobei der Deckel in einer linken aufrechten Halteposition dargestellt ist, und
- Fig. 2: das Gargefäß von Fig. 1 mit dem Deckel in einer rechten aufrechten Halteposition.

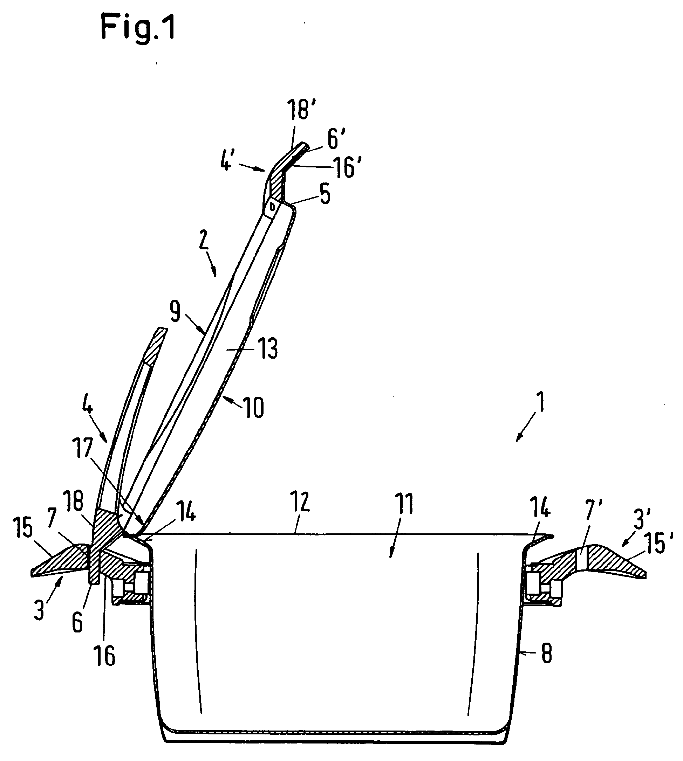

Das in Fig. 1 dargestellte Gargefäß besteht aus einem Behälter 1 und einem Deckel 2. Der Behälter 1 hat zwei identische Behältergriffe 3, 3', einen (in der Darstellung) links und einen rechts an der Umfangswandung 8. In entsprechenden Positionen hat der Deckel 2 zwei Deckelgriffe 4, 4'. Die beiden Deckelgriffe 4, 4' haben jeweils einen über den Deckelrand 5 radial nach außen hinausstehenden Griffarretierungsabschnitt 6, 6', welcher in eine jeweilige Aussparung 7, 7' der jeweiligen Behältergriffe 3, 3' derart einsteckbar ist, dass der Deckel 2 in einer solchen aufrechten Position an dem Behälter 1 gehalten ist, in welcher wenigstens der unterste Bereich der Deckelinnenseite 10 über der Behälteröffnung 11 liegt, weil die Behältergriffe 3, 3' in entsprechend geringem Abstand vom oberen Behälterrand 12 an der Umfangswandung 8 des Behälters 1 angebracht und die Griffarretierungsabschnitte 6, 6' der Deckelgriffe 4, 4' über den Deckelrand 5 hinausragend dimensioniert sind. Dabei können die Behältergriffe 3, 3' als Bügelgriffe ausgebildet sein, deren Bügelöffnung die Aussparungen 7, 7' für die Griffarretierungsabschnitte 6, 6' bilden.

Wie auf der einen (linken) Seite des Deckels 2 zu erkennen, ist der eine Deckelgriff 4 als ein Teilbereich des Deckels 2 (etwa bis zu dessen Mitte) im Abstand übergreifender Bügelgriff (Halbbügelgriff) ausgebildet, dessen Griffarretierungsabschnitt 6 eine Verlängerung über den Deckelrand 5 hinaus darstellt. Der Deckelgriff 4, 4' kann aber auch (nicht dargestellt) als Bügelgriff (Vollbügelgriff) ausgebildet in einem flachen Bogen die gesamte Oberseite 9 des Deckels 2 überkragen und wenigstens an einem Ende mit einer Verlängerung über den Deckelrand 5 hinaus einen Griffarretierungsabschnitt 6, 6' bilden. Wie dargestellt, ist es von Vorteil, wenn jedenfalls die beiden Behältergriffe 3, 3' untereinander identisch sind. Auch die Deckelgriffe 4, 4' können untereinander identisch sein, und zwar insbesondere als kurze, vom Deckelrand nach außen wegragende Bügel.

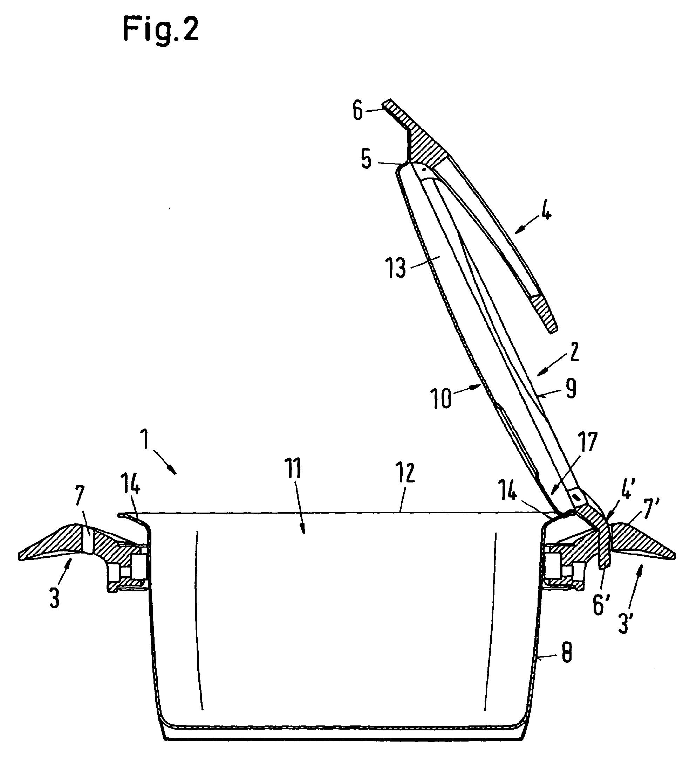

Die Figuren 1 und 2 veranschaulichen ferner, dass die Griffarretierungsabschnitte 6, 6' zur Unterstützung der Abgießfunktion bei geschlossenem Deckel 2 an den jeweiligen darunter befindlichen Behältergriffen 3, 3' anliegen, insbesondere wenn die jeweilige, in Radialrichtung abgewinkelte Kontur der Oberseite 15, 15' der Behältergriffe 3, 3' an die entsprechende Kontur der Unterseite 16, 16' der Deckelgriffe 4, 4' angepasst ist und die Oberseiten 15, 15'; 18, 18' der Behältergriffe 3, 3' und der Deckelgriffe 4, 4' ineinander übergehen.

Wie aus den Figuren 1 und 2 ersichtlich, durchsetzen die Aussparungen 7, 7' die Behältergriffe 3, 3' jeweils im Wesentlichen senkrecht und die Griffarretierungsabschnitte 6, 6' stehen im Wesentlichen radial von dem Deckelrand 5 ab. Auf diese Weise wird eine nahezu senkrechte bzw. wenig geneigte Haltelage des Deckels 5 erreicht, was zu einem guten Abfließen des Kondensats auf der Innenseite 10 des Deckels 5 führt.

Für die Stabilisierung des Deckels 5 in seiner Halteposition ist es von Vorteil, dass sich der Deckel 2 in dieser Position, z. B. mit einem Deckeleinsteckrand 13, an dem Behälterrand 12, insbesondere an einem die Behälteröffnung 11 begrenzenden Schüttrand 14 (zusätzlich) abstützt. Dabei liegt der unterste Bereich 17 der Deckelinnenseite 10 in der aufrechten Position des Deckels 2 über dem die Behälteröffnung 11 begrenzenden, zum Behälterinneren schräg abfallenden Schüttrand 14, so dass dort das Kondensat aufgefangen wird.

Sowohl die Behältergriffe 3, 3' als auch die Deckelgriffe 4, 4' können aus schlecht wärmeleitendem Kunststoff gebildet oder sonstwie gegen deren metallene Wandungen aufgrund eines schlechten Wärmeüberganges thermisch isoliert sein.

### Bezugszeichenliste:

- 1: Behälter
- 2: Deckel
- 3, 3': Behältergriffe
- 4, 4': Deckelgriffe
- 5: Deckelrand
- 6, 6': Griffarretierungsabschnitt
- 7, 7': Aussparung
- 8: Umfangswandung
- 9: Deckeloberseite
- 10: Deckelinnenseite
- 11: Behälteröffnung
- 12: Behälterrand
- 13: Deckeleinsteckrand
- 14: Schüttrand
- 15, 15': Oberseiten der Behältergriffe
- 16, 16': Unterseiten der Deckelgriffe
- 17: unterster Deckelbereich
- 18, 18': Oberseiten der Deckeigriffe

## Patentansprüche

1. Gargefäß aus einem Behälter (1) und einem Deckel (2), welche jeweils wenigstens einen Griff (Behältergriff (3, 3'); Deckelgriff (4, 4')) aufweisen, **dadurch gekennzeichnet, dass** der wenigstens eine Deckelgriff (4) eine über den Deckelrand (5) hinausstehenden Griffarretierungsabschnitt (6) hat, welcher in eine Aussparung (7, 7') oder Vertiefung des wenigstens einen Behältergriffes (3, 3') derart einsteckbar ist, dass der Deckel (2) in einer solchen aufrechten Position an dem Behälter (1) gehalten ist, in welcher wenigstens der unterste Bereich (17) der Deckelinnenseite (10) über bzw. in der Behälteröffnung (11) liegt.

2. Gargefäß nach Anspruch 1, **dadurch gekennzeichnet, dass** der Behälter (1) auf zwei einander gegenüberliegenden Seiten je einen an seiner Umfangswandung (8) angebrachten Behältergriff (3, 3') aufweist.

3. Gargefäß nach Anspruch 1 oder 2, **dadurch gekennzeichnet, dass** der Deckel (2) auf zwei einander gegenüberliegenden Seiten seines Deckelrandes (5) je einen Deckelgriff (4, 4') aufweist.

4. Gargefäß nach einem der vorhergehenden Ansprüche, **dadurch gekennzeichnet, dass** die Griffarretierungsabschnitte (6, 6') bei geschlossenem Deckel (2) an bzw. nahe bei den jeweiligen darunter befindlichen Behältergriffen (3, 3') liegen.

5. Gargefäß nach einem der vorhergehenden Ansprüche, **dadurch gekennzeichnet, dass** die Oberseiten (18, 18') der Deckelgriffe (4, 4') in die Oberseiten (15, 15') der Behältergriffe (3, 3') ineinander übergehen.

6. Gargefäß nach Anspruch 4 oder 5, **dadurch gekennzeichnet, dass** die jeweilige Kontur der Oberseite (15, 15') der Behältergriffe (3, 3') an die Kontur der Unterseite (16, 16') der Deckelgriffe (3, 3') angepasst ist.

7. Gargefäß nach Anspruch 6, **dadurch gekennzeichnet, dass** die jeweilige Oberseite (15, 15') der Behältergriffe (3, 3') und die Unterseite (16, 16') der Deckelgriffe (4, 4') in Radialrichtung zueinander passend leicht abgewinkelt bzw. gekrümmt sind.

8. Gargefäß nach einem der vorhergehenden Ansprüche, **dadurch gekennzeichnet, dass** der Behälter (1) zwei, vorzugsweise als Bügelgriffe ausgebildete Behältergriffe (3, 3') aufweist, deren Bügelöffnungen die Aussparungen (7, 7') für den Griffarretierungsabschnitt (6, 6') bilden.

9. Gargefäß nach einem der vorhergehenden Ansprüche, **dadurch gekennzeichnet, dass** der wenigstens eine Deckelgriff (4, 4') ein wenigstens einen Teilbereich des Deckels (2) im Abstand übergreifender Bügelgriff ist, dessen Verlängerung über den Deckelrand (5) hinaus den Griffarretierungsabschnitt (6) darstellt.

10. Gargefäß nach einem der vorhergehenden Ansprüche, **dadurch gekennzeichnet, dass** der wenigstens eine Deckelgriff (4, 4') als Bügelgriff ausgebildet in einem flachen Bogen die gesamte Oberseite (9) des Deckels (2) überkragt und wenigstens an einem Ende mit einer Verlängerung über den Deckelrand (5) hinaus einen Griffarretierungsabschnitt (6) bildet.

11. Gargefäß nach einem der vorhergehenden Ansprüche, **dadurch gekennzeichnet, dass** die beiden einander gegenüberliegenden Behältergriffe (3, 3') identisch sind.

12. Gargefäß nach einem der vorhergehenden Ansprüche, **dadurch gekennzeichnet, dass** die Aussparung (7, 7') oder Vertiefung des wenigstens einen Behältergriffes (3, 3') den jeweiligen Behältergriff (3, 3') im Wesentlichen senkrecht durchsetzt und der Griffarretierungsabschnitt (6, 6') im Wesentlichen radial von dem Deckelrand (5) absteht.

13. Gargefäß nach einem der vorhergehenden Ansprüche, **dadurch gekennzeichnet, dass** sich der Deckel (2) in seiner aufrechten Position (vorzugsweise mit einem Deckeleinsteckrand (13)), an dem Behälterrand (12), vorzugsweise an einem die Behälteröffnung (11) begrenzenden Schüttrand (14), abstützt.

14. Gargefäß nach einem der vorhergehenden Ansprüche, **dadurch gekennzeichnet, dass** wenigstens der unterste Bereiche (17) der Deckelinnenseite (10) in der aufrechten Position des Deckels (2) über einem die Behälteröffnung (11) begrenzenden, zum Behälterinneren hin schräg abfallenden Schüttrand (14) liegt.

15. Gargefäß nach einem der vorhergehenden Ansprüche, **dadurch gekennzeichnet, dass** der unterste Bereich (17) der Deckelinnenseite mit einer Einrichtung bzw. z. B. rinnenförmigen Formgestaltung zur Ableitung des Kondensats ausgestattet ist.

16. Gargefäß nach einem der vorhergehenden Ansprüche, **dadurch gekennzeichnet, dass** die Griffe (Behältergriffe (3, 3') und/oder Deckelgriffe (4, 4')) aus schlecht wärmeleitendem Kunststoff bestehen und/oder zwischen den Griffen (Behältergriffen (3, 3') und/oder Deckelgriffen (4, 4')) und der Behälterwandung (8) bzw. der Deckelwandung eine schlecht wärmeleitende Übergangsbereich vorgesehen ist.
